Europäisches Patentamt

European Patent Office

Office européen des brevets

(19)

(11) **EP 0 930 119 A1**

(12) **EUROPÄISCHE PATENTANMELDUNG**

(43) Veröffentlichungstag:
21.07.1999 Patentblatt 1999/29

(51) Int. Cl.$^6$: **B23C 3/06**

(21) Anmeldenummer: 99100431.8

(22) Anmeldetag: 11.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.01.1998 DE 19801862

(71) Anmelder: Hegenscheidt-MFD GmbH
41812 Erkelenz (DE)

(72) Erfinder: Janssen, Josef
41063 Mönchengladbach (DE)

(54) **Verfahren und Maschine zum Drehfräsen der Pleuellagerzapfen von Kurbelwellen mittels Scheibenfräsern**

(57) Es wird ein Verfahren zum Drehfräsen der Pleuellagerzapfen von Kurbelwellen mittels Scheibenfräsern vorgeschlagen, bei dem jede von zwei Spannfuttern (4, 5) einer Drehvorrichtung (3) aufgenommene Kurbelwelle (6) um ihre Achse (7) gedreht wird und gleichzeitig alle Pleuellagerzapfen (28, 29, 30) einer Kurbelwelle (6) mit je einem die Exzentrizität (e) des Pleuellagerzapfens (28, 29, 30) aufweisenden Scheibenfräser (34, 35, 36) eines Scheibenfräsersatzes (12) drehgefräst werden, wobei der Scheibenfräsersatz (12) im Verhältnis 1 : 1 zu der drehenden Kurbelwelle (6) angetrieben und in Richtung der x-Achse zugestellt wird.

Eine Maschine zur Durchführung des Verfahrens ist gekennzeichnet durch eine Antriebsvorrichtung (11) zur Erzeugung der Dreh- und Zustellbewegung des Scheibenfräsersatzes (12), wobei das Drehzahlverhältnis zwischen der Kurbelwelle (6) und dem Scheibenfräsersatz (12) 1 : 1 ist und jeder Scheibenfräser (34, 35, 36) des Scheibenfräsersatzes (12) die gleiche Exzentrizität (e) des ihm zugeordneten Pleuellagerzapfens (28, 29, 30) aufweist.

Fig. 1

**Beschreibung**

Die Erfindung bezieht sich auf ein Verfahren zum Drehfräsen der Pleuellagerzapfen von Kurbelwellen mittels Scheibenfräsern, bei dem jede von zwei Spannfuttern einer Drehvorrichtung aufgenommene Kurbelwelle um ihre Achse gedreht wird, und eine Maschine zur Durchführung des Verfahrens.

Bei einem bekannten Drehfräsverfahren der vorgenannten Art, wie es durch die DE 195 46 197 C1 offenbart ist, werden die sich um die Achse der Kurbelwelle drehenden Pleuellagerzapfen mit nachgeführten Scheibenfräsern drehgefräst.

Die hierfür erforderliche Steuerung zur Nachführung der Scheibenfräser an die Pleuellagerzapfen wird als aufwendig empfunden.

Der Erfindung liegt die Aufgabe zugrunde, ein Verfahren zum gleichzeitigen Drehfräsen aller Pleuellagerzapfen einer Kurbelwelle vorzuschlagen, bei dem die Steuerung zur Nachführung der Scheibenfräser an die Pleuellagerzapfen entfällt.

Erfindungsgemäß wird diese Aufgabe dadurch gelöst, daß alle Pleuellagerzapfen einer Kurbelwelle mit je einem die Exzentrizität des Pleuellagerzapfens aufweisenden Scheibenfräser eines Scheibenfräsersatzes drehgefräst werden, wobei der Scheibenfräsersatz im Verhältnis 1 : 1 zu der drehenden Kurbelwelle angetrieben und in Richtung der x-Achse zugestellt wird.

Eine Maschine zur Durchführung des Verfahrens ist gekennzeichnet durch eine Antriebsvorrichtung zur Erzeugung der Dreh- und Zustellbewegung des Scheibenfräsersatzes, wobei das Drehzahlverhältnis zwischen der Kurbelwelle und dem Scheibenfräsersatz 1 : 1 ist und jeder Scheibenfräser des Scheibenfräsersatzes die gleiche Exzentrizität des ihm zugeordneten Pleuellagerzapfens aufweist.

Vorteilhafte Ausführungsformen der Maschine ergeben sich aus den Ansprüchen 3 bis 8.

Im folgenden wird die Erfindung anhand einer Zeichnung, in der ein Ausführungsbeispiel zur Durchführung des Verfahrens schematisch dargestellt ist, näher beschrieben.

Es zeigt

Fig. 1       eine Drehfräsmaschine mit einem Scheibenfräsersatz und einer von ihr aufgenommenen Kurbelwelle im Grundriß,

Fig. 2       einen Schnitt durch den Scheibenfräsersatz und die Kurbelwelle entsprechend der Linie II - II in Fig. 1,

Fig. 3       einen Schnitt durch den Scheibenfräsersatz und die Kurbelwelle entsprechend der Linie III - III in Fig. 1,

Fig. 4       einen Schnitt durch den Scheibenfräsersatz und die Kurbelwelle entsprechend der Linie IV - IV in Fig. 1,

Fig. 5       einen Schnitt durch den Scheibenfräsersatz und die Kurbelwelle entsprechend der Linie V - V in Fig. 1,

Fig. 6       einen Schnitt durch den Scheibenfräsersatz und die Kurbelwelle entsprechend der Linie VI - VI in Fig. 1 in vergrößertem Maßstab, jedoch in einer um 60° weitergedrehten Stellung des Scheibenfräsersatzes und der Kurbelwelle gegenüber der in Fig. 5 gezeigten Stellung,

Fig. 7       die von der Drehfräsmaschine aufgenommene Kurbelwelle in vergrößertem Maßstab mit Bearbeitungszugaben an den Pleuellagerzapfen im Schnitt,

Fig. 8       eine Ansicht der Kurbelwelle in Richtung des Pfeiles A in Fig. 7,

Fig. 9       einen Schnitt durch die Kurbelwelle entsprechend der Linie IX - IX in Fig. 7,

Fig. 10     eine Skizze über die geometrischen Verhältnisse beim Drehfräsen eines Pleuellagerzapfens einer Kurbelwelle als Basis für die Berechnung der Schnittgeschwindigkeitskomponenten und der resultierenden Schnittgeschwindigkeit,

Fig. 11     ein Schnittgeschwindigkeitsdiagramm unter Berücksichtigung eines bestimmten Bearbeitungsprozesses.

Eine Drehfräsmaschine 1 hat ein Maschinenbett 2 mit einer darauf angeordneten Drehvorrichtung 3 zur Erzeugung der Drehbewegung einer von zwei Spannfuttern 4, 5 aufgenommenen Kurbelwelle 6.

Die Drehbewegung der Kurbelwelle 6 erfolgt um ihre Achse 7.

Jedes Spannfutter 4, 5 wird angetrieben von je einer Antriebseinheit 8, 9.

Beide Antriebseinheiten 8, 9 sind in Richtung der z-Achse auf die Länge 10 der Kurbelwelle 6 einstellbar ausgeführt.

Der Gleichlauf der beiden Spannfutter 4, 5 wird erreicht durch eine elektrische Gleichlaufschaltung der Antriebseinheiten 8, 9.

Eine Antriebsvorrichtung 11, die neben der Drehvorrichtung 3 auf dem Maschinenbett 2 angeordnet ist, hat einen Scheibenfräsersatz 12 zwischen zwei Spindelkästen 13, 14 aufgenommen, von denen der Spindelkasten 13 von einem Motor 15 angetrieben wird.

Der Motor 15 erzeugt die Drehbewegung des Scheibenfräsersatzes 12 um seine Achse 16.

Beide Spindelkästen 13, 14, die als Schlitten auf je einer Doppelführung 17, 18 angeordnet sind, sind in Richtung der x-Achse synchron verschiebbar.

Zur Erzeugung der Verschiebebewegung beider Spindelkästen 13, 14 bzw. der Zustellbewegung des Scheibenfräsersatzes 12 sind zwei synchronlaufende Motoren 19, 20 eingesetzt.

Der Scheibenfräsersatz 12 enthält zwei Kupplungshälften 21, 22, die jeweils mit einer Kupplungshälfte 23, 24 eines Spindelkastens 13, 14 gekuppelt sind.

Die Drehachse der Drehvorrichtung 3, die mit der Achse 7 der Kurbelwelle 6 zusammenfällt, ist mit 25 bezeichnet.

Die Drehachse der Antriebsvorrichtung 11, die mit der Achse 16 des Scheibenfräsersatzes 12 zusammenfällt, ist mit 26 bezeichnet.

Beide Drehachsen 25, 26 liegen stets parallel in einer in Richtung der x-Achse verlaufenden Ebene 27.

Bei Drehung der Kurbelwelle 6 um ihre Achse 7 werden alle drei um 120° versetzten und eine Exzentrizität e aufweisenden Pleuellagerzapfen 28, 29, 30 im Bereich der Bearbeitungszugaben 31, 32, 33 gleichzeitig mit drei gleichen kreisrunden Scheibenfräsern 34, 35, 36 des sich drehenden Scheibenfräsersatzes 12 auf den Durchmesser $d_2$ drehgefräst, wobei die Zustellung des Scheibenfräsersatzes 12 in Richtung der x-Achse erfolgt.

Jeder Scheibenfräser 34, 35, 36, der einem Pleuellagerzapfen 28, 29, 30 zugeordnet ist, hat die gleiche Exzentrizität e gegenüber der Achse 16 des Scheibenfräsersatzes 12 und die gleiche Drehzahl n der Kurbelwelle 6.

Dieses Drehzahlverhältnis 1 : 1 zwischen der Kurbelwelle 6 und den Scheibenfräsern 34, 35, 36 bzw. dem Scheibenfräsersatz 12 wird erreicht durch elektrische Steuerung der Antriebseinheiten 8, 9 der Drehvorrichtung 3 und des Motors 15 der Antriebsvorrichtung 11.

Der Scheibenfräsersatz 12 besteht aus den drei Scheibenfräsern 34, 35, 36 gleichen Durchmessers $D_2$, den zwei Kupplungshälften 21, 22, zwei zwischen den Scheibenfräsern 34 bis 36 angeordneten Zwischenscheiben 37, 38 und einer Spannstange 39.

Die Spannstange 39 ist zentrisch angeordnet und über eine Paßfeder 40 drehfest mit den Kupplungshälften 21, 22 und den Zwischenscheiben 37, 38 verbunden.

Die Scheibenfräser 34, 35, 36 sind jeweils mit einer Bohrung 41, 42, 43 versehen, deren Durchmesser größer ist als der sich ergebende Durchmesser aus der Spannstange 39 mit der Paßfeder 40.

Zudem sind in jedem Scheibenfräser 34, 35, 36 drei gleichgerichtete Langlöcher 44, 45, 46; 47, 48, 49; 50, 51, 52 angeordnet, wobei ein Langloch 44, 47, 50 radial zu der Fräsermitte 53, 54, 55 liegt.

Die beiden anderen Langlöcher 45, 46; 48, 49; 51, 52 eines jeden Scheibenfräsers 34, 35, 36 liegen achssymmetrisch und quasi um 120° versetzt zu dem Langloch 44, 47, 50.

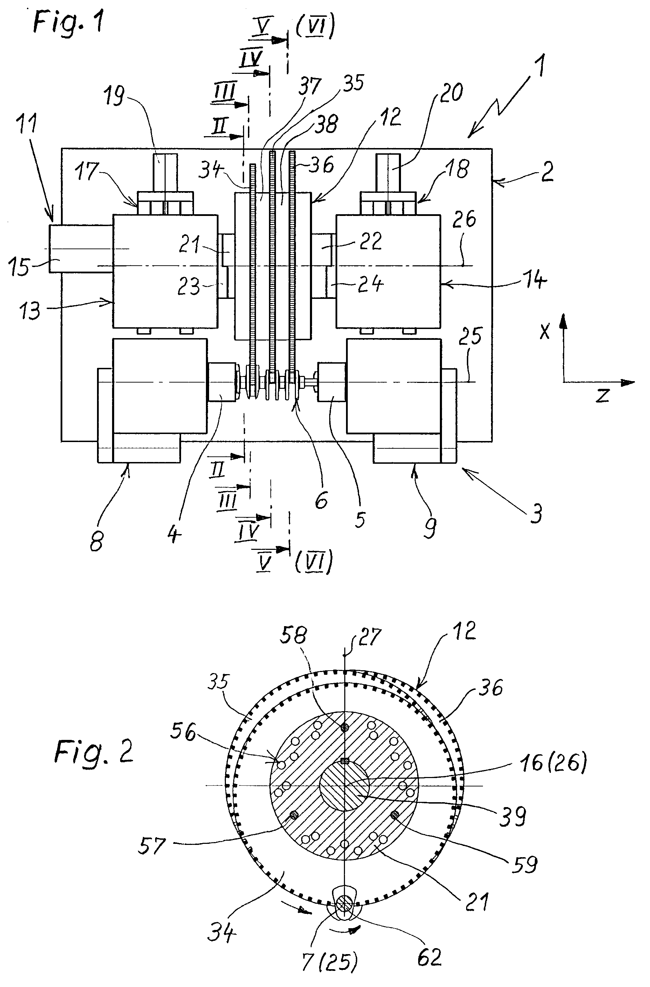

Die Kupplungshälften 21, 22 und die Zwischenscheiben 37, 38 haben je ein gleiches Lochmuster 56 (Fig. 2), von dem jeweils drei Löcher mit den drei Langlöchern 44 bis 52 eines jeden exzentrisch eingestellten Scheibenfräsers 34, 35, 36 in Übereinstimmung gebracht sind.

Das Lochmuster 56 trägt verschiedenen Versetzungen der Pleuellagerzapfen von anderen Kurbelwellen Rechnung.

Die Drehmitnahme der Scheibenfräser 34, 35, 36 wird bewirkt durch drei Mitnehmerbolzen 57, 58, 59, die in die drei vorher übereinstimmenden Löcher der Lochmuster 56 und in die Langlöcher 44 bis 52 eingeschoben sind.

Die Mitnehmerbolzen 57, 58, 59 werden auch zur exzentrischen Fixierung der Scheibenfräser 34, 35, 36 benutzt.

Bei jedem fixierten Scheibenfräser 34, 35, 36 ist jedes Langloch 44 bis 52 mit einem Teilbereich eines Mitnehmerbolzens 57, 58, 59 und zwei Formstücken 60, 61 ausgefüllt.

Das Ausführungsbeispiel ist abgestellt auf eine Kurbelwelle 6, bei der die Hauptlagerzapfen 62, 63, 64, 65 schon auf den Durchmesser $d_1$ bearbeitet sind.

Auf der Drehfräsmaschine 1 erfolgt die Bearbeitung der Pleuellagerzapfen 28, 29, 30 durch Gegenlauffräsen bei gleicher Drehzahl n der Kurbelwelle 6 und des Scheibenfräsersatzes 12.

Beim Drehfräsen ergeben die Schnittgeschwindigkeitskomponente $v_{FPL}$ eines Scheibenfräsers 34, 35, 36 und die Schnittgeschwindigkeitskomponente $v_{PL}$ eines Pleuellagerzapfen 28, 29, 30 zusammen die resultierende Schnittgeschwindigkeit $v_{RPL}$.

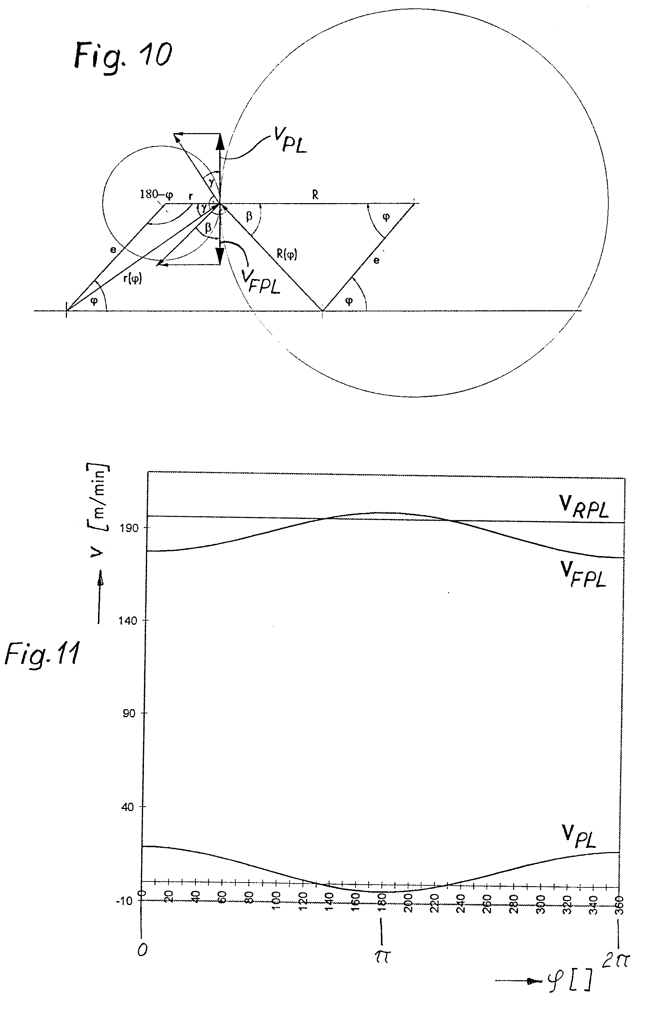

Aus der Skizze nach Fig. 10 sind die Formeln für die Berechnung der Schnittgeschwindigkeiten wie folgt abge-

3

leitet worden:

$$v_{FPL} = 2 \cdot \pi \cdot n \cdot R_{(\varphi)} \cos \beta$$

$$R_{(\varphi)} = \sqrt{e^2 - R^2 - 2 \cdot e \cdot R \cdot \cos \varphi}$$

$$\beta = \arccos \left( \frac{e^2 - R^2 - R_{(\varphi)}^2}{-2 \cdot R \cdot R_{(\varphi)}} \right)$$

$$v_{PL} = 2 \cdot \pi \cdot n \cdot r_{(\varphi)} \cdot \cos \gamma$$

$$r_{(\varphi)} = \sqrt{e^2 + r^2 - 2 \cdot e \cdot r \cdot \cos (\pi - \varphi)}$$

$$\gamma = \arccos \left( \frac{e^2 - r^2 - r_{(\varphi)}^2}{-2 \cdot r \cdot r_{(\varphi)}} \right)$$

$$V_{RPL} = v_{FPL} + v_{PL}$$

Das Geschwindigkeitsdiagramm nach Fig. 11 berücksichtigt in einem Drehwinkelbereich von $\varphi = 0$ bis $2\pi$ folgenden Bearbeitungsprozeß:

| | |
|---|---|
| Durchmesser eines Scheibenfräsers 34, 35, 36: ($D_2 = 2R$) | $D_2 = 1000$ mm |
| Durchmesser eines Pleuellagerzapfens 28, 29, 30: ($d_2 = 2r$) | $d_2 = 40$ mm |
| Exzentrizität eines Pleuellagerzapfens 28, 29, 30: | $e = 30$ mm |
| Drehzahl der Kurbelwelle 6 und Drehzahl des Scheibenfräsersatzes 12: | $n = 60$ min$^{-1}$ |

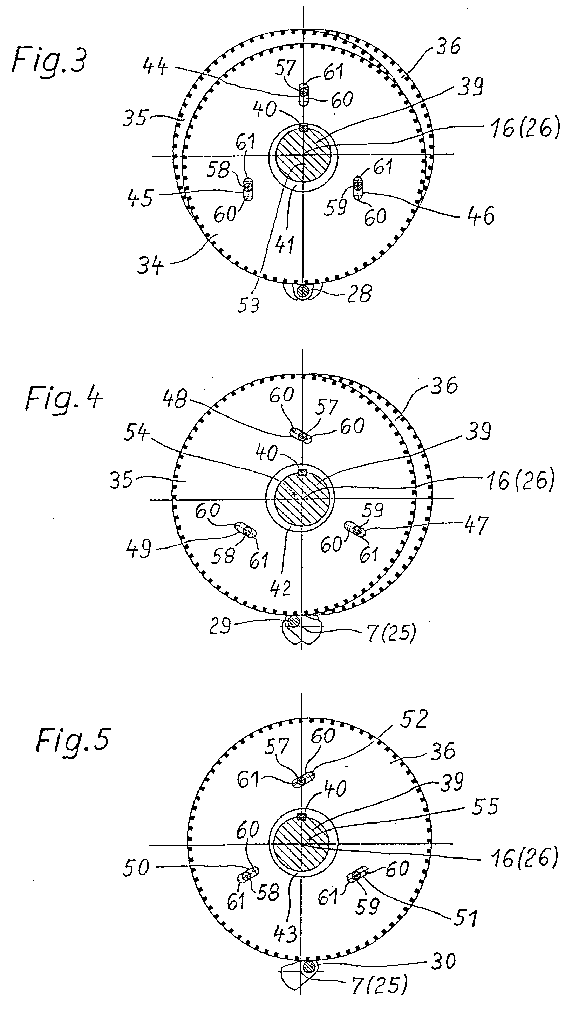

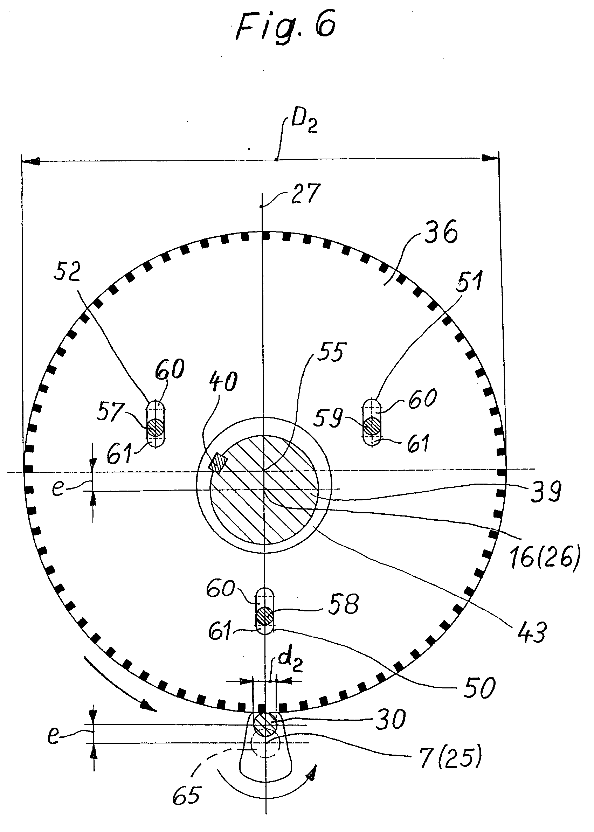

Es folgt nun die Berechnung der resultierenden Schnittgeschwindigkeit $v_{RPL}$ in den Bearbeitungsstellungen nach den Fig. 6 und 3:

$$v_{FPL} \quad = 2 \cdot \pi \cdot n \cdot (R - e)$$
$$(\varphi = 0 \text{ bzw. } 2\pi)$$
$$= 2 \cdot \pi \cdot 60 \cdot (0,500 - 0,030) \qquad = 177,26 \text{ m/min}$$

$$v_{PL} \quad = 2 \cdot \pi \cdot n \cdot (e + r)$$
$$(\varphi = 0 \text{ bzw. } 2\pi)$$
$$= 2 \cdot \pi \cdot 60 \cdot (0,030 + 0,020) \qquad = \underline{18,85 \text{ m/min}}$$

$$v_{RPL} \quad = v_{FPL} \qquad + v_{PL} \qquad = \underline{\underline{196,11 \text{ m/min}}}$$
$$(\varphi = 0 \text{ bzw. } 2\pi) \quad (\varphi = 0 \text{ bzw. } 2\pi) \quad (\varphi = 0 \text{ bzw. } 2\pi)$$

$$v_{FPL} \quad = 2 \cdot \pi \cdot n \cdot (R + e)$$
$$(\varphi = \pi)$$
$$= 2 \cdot \pi \cdot 60 \cdot (0,500 + 0,03) \qquad = 199,88 \text{ m/min}$$

$$v_{PL} \quad = -2 \cdot \pi \cdot n \cdot (e - r)$$
$$(\varphi = \pi)$$
$$= -2 \cdot \pi \cdot 60 \cdot (0,030 - 0,020) \qquad = \underline{-3,77 \text{ m/min}}$$

$$v_{RPL} \quad = v_{FPL} \qquad + v_{PL} \qquad = \underline{\underline{196,11 \text{ m/min}}}$$
$$(\varphi = \pi) \qquad (\varphi = \pi) \qquad (\varphi = \pi)$$

In den Bearbeitungsstellungen zwischen $\varphi$ = 0 bis $\pi$ und $\pi$ bis $2\pi$ ergibt sich ebenfalls, daß die resultierende Schnittgeschwindigkeit $v_{RPL}$ mit 196,11 m/min stets konstant bleibt.

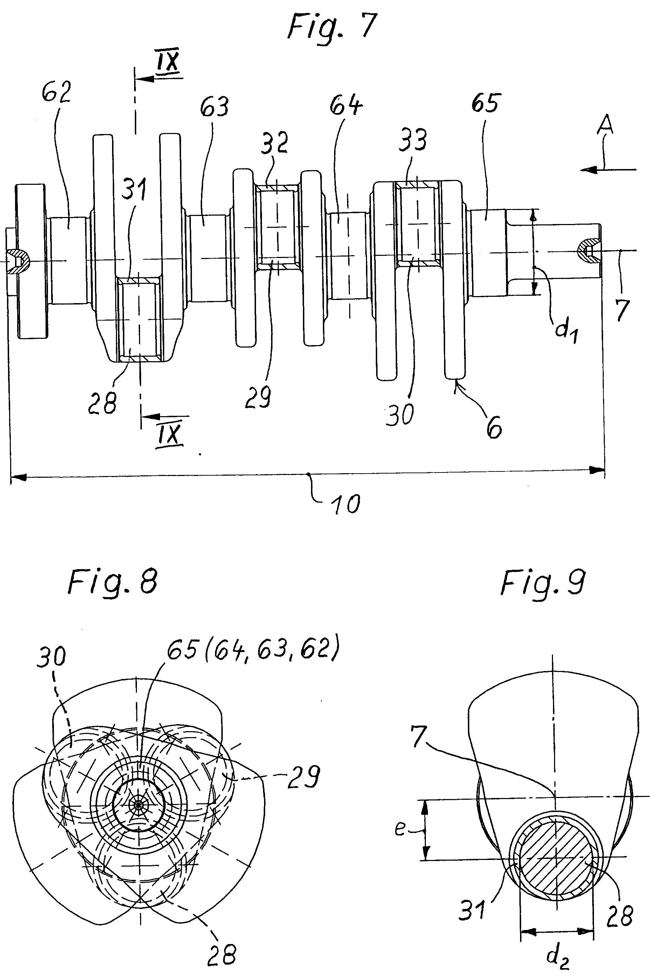

Zu Beginn des Bearbeitungsprozesses ist die resultierende Schnittgeschwindigkeit $v_{RPL}$ aufgrund der Bearbeitungszugaben 31, 32, 33 (Fig. 7) an den Pleuellagerzapfen 28, 29, 30 geringfügig höher.

Wird bei den Bearbeitungszugaben 31, 32, 33 eine radiale Ausdehnung von 3 mm berücksichtigt, ergibt sich die resultierende Schnittgeschwindigkeit $v_{RPL}$ zu

$$196,11 + 2 \cdot \pi \cdot 60 \cdot 0,003 = 196,11 + 1,13 = 197,24 \text{ m/min.}$$

Bezugszeichenliste

| 1 | Drehfräsmaschine |
|---|---|
| 2 | Maschinenbett |
| 3 | Drehvorrichtung |
| 4 | Spannfutter |
| 5 | Spannfutter |
| 6 | Kurbelwelle |
| 7 | Achse |
| 8 | Antriebseinheit |
| 9 | Antriebseinheit |
| 10 | Länge |
| 11 | Antriebsvorrichtung |
| 12 | Scheibenfräsersatz |
| 13 | Spindelkasten |
| 14 | Spindelkasten |
| 15 | Motor |

| | |
|---|---|
| 16 | Achse |
| 17 | Doppelführung |
| 18 | Doppelführung |
| 19 | Motor |
| 20 | Motor |
| 21 | Kupplungshälfte |
| 22 | Kupplungshälfte |
| 23 | Kupplungshälfte |
| 24 | Kupplungshälfte |
| 25 | Drehachse |
| 26 | Drehachse |
| 27 | Ebene |
| 28 | Pleuellagerzapfen |
| 29 | Pleuellagerzapfen |
| 30 | Pleuellagerzapfen |
| 31 | Bearbeitungszugabe |
| 32 | Bearbeitungszugabe |
| 33 | Bearbeitungszugabe |
| 34 | Scheibenfräser |
| 35 | Scheibenfräser |
| 36 | Scheibenfräser |
| 37 | Zwischenscheibe |
| 38 | Zwischenscheibe |
| 39 | Spannstange |
| 40 | Paßfeder |
| 41 | Bohrung |
| 42 | Bohrung |
| 43 | Bohrung |
| 44 | Langloch |
| 45 | Langloch |
| 46 | Langloch |
| 47 | Langloch |
| 48 | Langloch |
| 49 | Langloch |
| 50 | Langloch |
| 51 | Langloch |
| 52 | Langloch |
| 53 | Fräsermitte |
| 54 | Fräsermitte |
| 55 | Fräsermitte |
| 56 | Lochmuster |
| 57 | Mitnehmerbolzen |
| 58 | Mitnehmerbolzen |
| 59 | Mitnehmerbolzen |
| 60 | Formstück |
| 61 | Formstück |
| 62 | Hauptlagerzapfen |
| 63 | Hauptlagerzapfen |
| 64 | Hauptlagerzapfen |
| 65 | Hauptlagerzapfen |
| $d_1$ | Durchmesser |
| $d_2$ | Durchmesser |
| $D_2$ | Durchmesser |
| e | Exzentrizität |
| $v_{FPL}$ | Schnittgeschwindigkeitskomponente |
| $v_{PL}$ | Schnittgeschwindigkeitskomponente |
| $v_{RPL}$ | resultierende Schnittgeschwindigkeit |
| $\varphi$ | Drehwinkel |

**Patentansprüche**

1. Verfahren zum Drehfräsen der Pleuellagerzapfen von Kurbelwellen mittels Scheibenfräsern, bei dem jede von zwei Spannfuttern einer Drehvorrichtung aufgenommene Kurbelwelle um ihre Achse gedreht wird, <u>dadurch gekennzeichnet</u>, daß alle Pleuellagerzapfen (28, 29, 30) einer Kurbelwelle (6) mit je einem die Exzentrizität (e) des Pleuellagerzapfens (28, 29, 30) aufweisenden Scheibenfräser (34, 35, 36) eines Scheibenfräsersatzes (12) drehgefräst werden, wobei der Scheibenfräsersatz (12) im Verhältnis 1 : 1 zu der drehenden Kurbelwelle (6) angetrieben und in Richtung der x-Achse zugestellt wird.

2. Maschine zur Durchführung des Verfahrens nach Anspruch 1 mit einem Maschinenbett und einer darauf angeordneten Drehvorrichtung zur Erzeugung der Drehbewegung einer Kurbelwelle um ihre Achse, gekennzeichnet durch eine Antriebsvorrichtung (11) zur Erzeugung der Dreh- und Zustellbewegung des Scheibenfräsersatzes (12), wobei das Drehzahlverhältnis zwischen der Kurbelwelle (6) und dem Scheibenfräsersatz (12) 1 : 1 ist und jeder Scheibenfräser (34, 35, 36) des Scheibenfräsersatzes (12) die gleiche Exzentrizität (e) des ihm zugeordneten Pleuellagerzapfens (28, 29, 30) aufweist.

3. Maschine nach Anspruch 2, dadurch gekennzeichnet, daß der Scheibenfräsersatz (12) aus mehreren Scheibenfräsern (34, 35, 36), zwei Kupplungshälften (21, 22), einer Spannstange (39) und je einer zwischen zwei Scheibenfräsern (34, 35, 36) angeordneten Zwischenscheiben (37, 38) besteht.

4. Maschine nach den Ansprüchen 2 und 3, dadurch gekennzeichnet, daß in jedem Scheibenfräser (34, 35, 36) drei gleichgerichtete Langlöcher (44, 45, 46; 47, 48, 49; 50, 51, 52) angeordnet sind, von denen ein Langloch (44, 47, 50) radial zu der Fräsermitte (53, 54, 55) liegt und die beiden anderen Langlöcher (45, 46; 48, 49; 51, 52) achssymmetrisch und quasi 120° versetzt zu dem radial liegenden Langloch (44, 47, 50) sind.

5. Maschine nach den Ansprüchen 2 bis 4, dadurch gekennzeichnet, daß die Kupplungshälften (21, 22) und jede Zwischenscheibe (37, 38) des Scheibenfräsersatzes (12) je ein gleiches Lochmuster (56) aufweisen, von dem jeweils drei Löcher mit den drei Langlöchern (44 bis 52) eines jeden exzentrisch eingestellten Scheibenfräsers (34, 35, 36) in Übereinstimmung gebracht sind.

6. Maschine nach den Ansprüchen 2 bis 5, dadurch gekennzeichnet, daß die Scheibenfräser (34, 35, 36) über ihre Langlöcher (44 bis 52) mit Mitnehmerbolzen (57, 58, 59) verbunden sind.

7. Maschine nach den Ansprüchen 2 bis 6, dadurch gekennzeichnet, daß in jedes Langloch (44 bis 52) der Scheibenfräser (34, 35, 36) zwei Formstücke (60, 61) eingesetzt sind.

8. Maschine nach den Ansprüchen 2 bis 7, dadurch gekennzeichnet, daß die Scheibenfräser (34, 35, 36) des Scheibenfräsersatzes (12) gleich ausgeführt sind.

Fig. 1

Fig. 2

Fig.3

Fig.4

Fig.5

Fig. 6

## Fig. 7

## Fig. 8

## Fig. 9

11

Fig. 10

Fig. 11

EP 0 930 119 A1

**Europäisches Patentamt**

## EUROPÄISCHER RECHERCHENBERICHT

Nummer der Anmeldung

EP 99 10 0431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 1 487 843 A (EINIG) 25. März 1924 * Seite 1, Zeile 64 - Seite 3, Zeile 27; Abbildung 1 * --- | 1-3,8 | B23C3/06 |
| A | DE 26 18 093 A (HELLER) 16. März 1978 ----- | | |

**RECHERCHIERTE SACHGEBIETE (Int.Cl.6)**

B23C

Der vorliegende Recherchenbericht wurde für alle Patentansprüche erstellt

| Recherchenort | Abschlußdatum der Recherche | Prüfer |
|---|---|---|
| DEN HAAG | 20. April 1999 | Bogaert, F |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
    Dokument

EPO FORM 1503 03.82 (P04C03)

13

**ANHANG ZUM EUROPÄISCHEN RECHERCHENBERICHT
ÜBER DIE EUROPÄISCHE PATENTANMELDUNG NR.**

EP 99 10 0431

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-1999

| Im Recherchenbericht angeführtes Patentdokument | Datum der Veröffentlichung | Mitglied(er) der Patentfamilie | Datum der Veröffentlichung |
|---|---|---|---|
| US 1487843 A | 25-03-1924 | KEINE | |
| DE 2618093 A | 16-03-1978 | AT 345631 B<br>AT 177477 A<br>GB 1554018 A<br>JP 52131292 A<br>US 4116111 A | 25-09-1978<br>15-01-1978<br>17-10-1979<br>04-11-1977<br>26-09-1978 |

EPO FORM P0461

Für nähere Einzelheiten zu diesem Anhang : siehe Amtsblatt des Europäischen Patentamts, Nr.12/82